# EUROPEAN PATENT APPLICATION

(11) **EP 2 709 347 A1**
(43) Date of publication of application: **19.03.2014**
(21) Application number: 12781579.3
(22) Date of filing: 06.04.2012
(51) Int. Cl.: H04M 11/00, H04M 1/00, H04Q 9/00

(54) **REMOTE OPERATION SYSTEM, RELAY DEVICE, MOBILE COMMUNICATION TERMINAL DEVICE, AND RELAY METHOD**

(30) Priority: 12.05.2011 JP 2011106898
(71) Applicant: NEC CASIO Mobile Communications, Ltd., Kawasaki-shi, Kanagawa 211-8666 (JP)
(72) Inventor: SHIMIZU, Kazuto, Kawasaki-shi Kanagawa 211-8666 (JP)
(74) Representative: Vossius & Partner
(86) International application number: PCT/JP2012/002420
(87) International publication number: WO 2012/153457

(57) **Abstract**

According to a related remote control system, a remote control processing may occur even during an operated side terminal is in an emergency situation. An operated side terminal transmits, to a relay server, reception status information identifying a reception status for a remote control. Upon receiving a remote control request from an operating side terminal, the relay server determines whether or not a remote control is permitted based on access permission information which includes a pair of an operating side terminal permitted to remote control and an operated side terminal, and additionally, determines, based on reception status information, whether or not the operated side terminal currently accepts the remote control. Based on the determination outcomes, the relay server transmits, to the operated side terminal, a control message related to the remote control, based on which the operated side terminal provides a service.

## Description

### Technical Field

The present invention relates to a remote control system using a relay device, and to the relay device, a mobile communication terminal device, and a relay method used in the remote control system.

### Background Art

In recent years, techniques for remotely controlling an operated side terminal from an operating side terminal via a network have been developed.

Patent Document 1 discloses a remote control system in which an operating side terminal transmits, to a remote control server, remote control request data identifying the content of a remote control, and the remote control server transmits, to an operating-side terminal, operation request data in order to request the execution of the remote control in accordance with the content of the remote control identified in the remote control request data. The remote control server, which relays the remote control, makes an inquiry to an initial setting content storing DB, which has stored therein already agreed upon usage condition data representing permissible remote control contents, to determine whether the content of the remote control requested by the remote control request data is permissible. According to the remote control system having a configuration in which the remote control server carries out the control in accordance with the content of the remote control, a user is allowed to perform various types of remote controls with good operability.

Also, in Patent Document 2, a home network in which a home server controls a control target device in accordance with a remote control message transmitted from a control device, such as a mobile telephone, has been disclosed. According to such configuration, the home server retains a remote control mode corresponding to the characteristics of the control target device, and carries out the remote control as instructed in accordance with the remote control mode, thereby making it possible to achieve control corresponding to target devices.

### Citation List

### Patent Literature

[Patent Document 1] JP Patent Publication No. 2005-198099
[Patent Document 2] JP Patent Publication No. 2008-35435

### Summary of Invention

### Technical Problem

With a mobile communication terminal such as a mobile phone, there arises a need to display the information, which is acquired via a sensory function of the terminal, and/or data of pictures, or the like, stored inside the terminal, to friends and/or family, or the like, who are registered in the terminal.

In order to provide services in response to such need, there are methods with which positional information and/or pictures are transmitted by the mobile communication terminal by installing a server function which, upon receiving a request via a certain protocol from an external source, allows the server function of the terminal to process such request.

Here, there are occasions where it is not preferable for the mobile communication terminal, as the operated side terminal providing services, to receive a remote control request from users who are already permitted to remote control the terminal when, for example, the remaining battery life of the terminal is low, or when the terminal is preoccupied with an urgent operation.

However, according to the conventional remote control system, since a remote control request notice is transmitted to the operated side terminal in accordance with a pre-registered initial setting, which inevitably initiates a reception process and a control process, there is a possibility of increasing the electricity consumption and/or slowing the working speed of the terminal even during an emergency.

In view of the above stated problems, the present invention is intended to provide a remote control system, and a mobile communication terminal device, a relay device, and a relay method used in the remote control system so as to reduce the burden imposed on the operated side terminal in consideration of the state of the terminal.

### Solution to Problem

A remote control system of the present invention includes a first mobile communication terminal device arranged to carry out a remote control as an operating side terminal, a second communication terminal device arranged to receive the remote control as an operated side terminal, and a relay server arranged to relay the remote control, wherein the first mobile communication terminal device includes a remote control request transmission means for transmitting a remote control request, the second mobile communication terminal device includes a reception status information transmission means for transmitting reception status information identifying a reception status for the remote control, a control message reception means for receiving a control message related to the remote control, and a service providing means for providing a service based on the received control message, and the relay server includes a reception means for receiving the remote control request and the reception status information, an access permission information management means for managing access permission information identifying a correspondence between the operating side terminal, and an operating side user, permitted to remote control and the operated side terminal, and an operated side user, a reception status information management means for managing the received reception status information, a determination means for determining, based on the access permission information and the reception status information, whether to permit the remote control requested in the remote control request, and a control message transmission means for transmitting, when the determination means determines the remote control is permitted, a control message related to the remote control.

Further, a mobile communication terminal device of the present invention includes a reception status information transmission means for transmitting reception status information identifying a reception status for a remote control, a control message reception means for receiving a control message related to the remote control, and a service providing means for providing a service based on the received control message.

Furthermore, a relay device includes a reception means for receiving a remote control request requesting to start a remote control and reception status information identifying a reception status for the remote control, an access permission information management means for managing access permission information identifying a correspondence between an operating side terminal, and an operating side user, permitted to remote control and an operated side terminal, and an operated side user, a reception status information management means for managing the received reception status information, a determination means for determining, based on the access permission information and the reception status information, whether to permit the remote control requested in the remote control request, and a control message transmission means for transmitting, when the determination means determines the control message is permitted, a control message related to the remote control.

Further, the relay method according to the present invention includes a reception status information reception step for receiving reception status information identifying a reception status for a remote control at an operated side terminal from the operated side terminal receiving the remote control, a remote control request reception step for receiving a remote control request from an operating side terminal executing the remote control, a first determining step for determining whether or not the remote control requested in the received remote control request is permitted based on access permission information identifying a correspondence between the operating side terminal, and an operating side user, and the operated side terminal, and an operated side user, a second determining step for determining whether or not the operated side terminal accepts the remote control requested in the remote control request based on the received reception status information, a transmission step for transmitting a control message related to the remote control to the operated side terminal when the first step 1 determines the remote control is permitted and step 2 determines the operated side terminal accepts the request.

### Advantageous Effects of Invention

According to the present invention, it is possible to provide a remote control system, and a mobile communication terminal device, a relay device, and a relay method used in the remote control system operable to reduce the burden imposed of an operated side terminal in consideration of the state of the terminal.

### Brief Description of Drawings

Fig. 1 is a diagram illustrating a configuration of a remote control system according to a first exemplary embodiment of the present invention;
Fig. 2 is a diagram illustrating an example of the access permission information according to the first exemplary embodiment of the present invention;
Fig. 3 is a diagram illustrating an example of the reception status information according to the first exemplary embodiment of the present invention;
Fig. 4 is a diagram illustrating a configuration of a remote control system according to a second exemplary embodiment of the present invention;
Fig. 5 is a flow chart illustrating an operation of the remote control system according to the second exemplary embodiment of the present invention;
Fig. 6 is a diagram illustrating a configuration of a remote control system according to a third exemplary embodiment of the present invention;
Fig. 7 is a diagram illustrating a configuration of a remote control system according to a fourth exemplary embodiment of the present invention;
Fig. 8 is a diagram illustrating an example of the reception status information according to a fourth exemplary embodiment of the present invention;
Fig. 9 is a diagram illustrating a configuration of a remote control system according to a fifth exemplary embodiment of the present invention;
Fig. 10 is a diagram illustrating a relationship between a type of a remote control and a priority corresponding thereof.

### Description of Embodiments

### (Exemplary embodiment 1)

Hereinafter, a remote control system according to a first exemplary embodiment of the present invention will be described in detail with reference to the drawings.

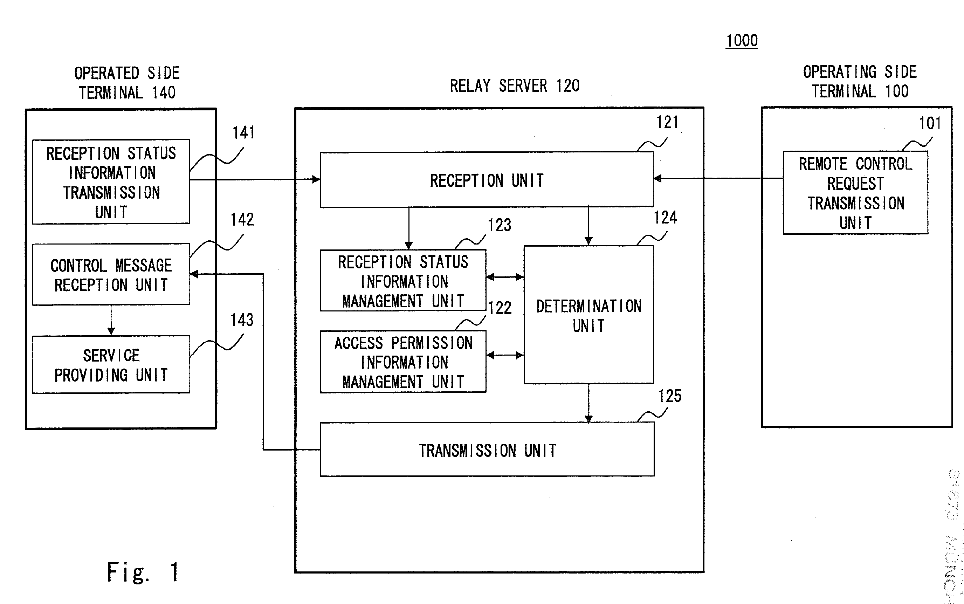

Fig. 1 is a block diagram illustrating a configuration of a remote control system 1000 according to the first exemplary embodiment of the present invention. The remote control system 1000 is configured to include, broadly speaking, an operating side terminal 100, a relay server 120, and an operated side terminal 140. Please note that the operating side terminal 100 and the operated side terminal 140 of the remote control system 1000 according to the first exemplary embodiment of the present invention each are a mobile communication terminal device such as a mobile telephone. Hereinafter, each device will be described in detail.

The operating side terminal 100, which executes a remote control, includes a remote control request transmission unit 101.

The remote control request transmission unit 101 transmits a remote control request to the relay server 120. Here, the remote control request is a piece of information transmitted from the operating side terminal in order to initiate a remote control, and includes information identifying the terminal which executes the remote control and/or a user of the operating side, information identifying the operated side terminal which is a target of the remote control, and a message requesting to start the remote control.

Next, the relay server 120 will be described. The relay server 120 includes a reception unit 121, an access permission information management unit 122, a reception status information management unit 123, a determination unit 124, and a transmission unit 125.

The reception unit 121 receives the remote control request from the operating side terminal 100. Further, the reception unit 121 receives reception status information, which will be described below, from the operated side terminal 140. The received reception status information is outputted to the reception status information management unit 123, while the received remote control request is outputted to the determination unit 124.

The access permission information management unit 122 manages access permission information. Here, the access permission information is a piece of information identifying a correspondence relationship between the operated side terminal and the operating side terminal having permission to remote control. To be more specific, the access permission information comprises a set of information allowing the operated side terminal and/or a user on the operated side, and the operating side terminal and/or a user on the operating side to be identified. The access permission information is initial registration information for which the operated side user, who receives the remote control, accesses the relay server in order to register the access permission information. The access permission information management unit 122 is provided with a storage unit, which stores therein the access permission information, and, for example, updates the access permission information in accordance with the access from the user.

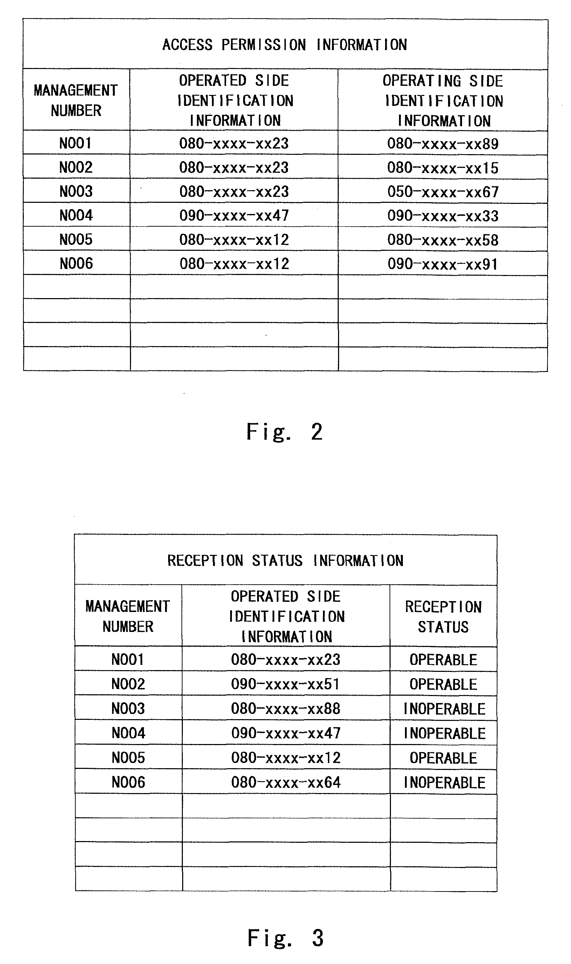

Fig. 2 illustrates an example of the access permission information. According to the access permission information illustrated in Fig. 2, a telephone number is used to register operated side identification information and operating side identification information, which respectively identifies the operated side terminal and the operating side terminal. Note, regarding management numbers N001 through N003, an identical operated side terminal (identical telephone number) corresponds to three separate operating side terminals. Further, a second operated side terminal represented by management number N004, and operated side terminals represented by management numbers N005 and N006 are each respectively registered with a unique phone number of an operating side terminal.

Note that while a mobile telephone number, a terminal identification number, or the like, may be used as the information to identify a terminal, it is also acceptable that a terminal is registered in advance with the relay server and a unique identifier generated during the registration is used as the identifier thereof. Further, while an email address, or the like, may be used as the information to identify a user, a unique identifier, which is generated when a registration is carried out in advance with the relay server, may also be used in the same manner as the information identifying a terminal. Under the circumstances noted above, the relay server is to guarantee the uniqueness of these identifiers.

Further, it is imperative that any identification information is falsification-proof. In a case where identification information by itself may be falsified, an individual password, for example, may be arranged in order to prevent others from using one's identification information. That is to say, the remote control request includes a password, while access permission information separately stores therein the password. At a determination unit of the relay server, an authentification is carried out using the password.

The reception status information management unit 123 manages reception status information, which identifies a reception status of each operated side terminal with respect to a remote control. To be more specific, the reception status information management unit 123 is provided with a storage unit arranged to receive and store therein the reception status information received at the reception unit 121.

An example of the reception status information is illustrated in Fig. 3. The reception status information has stored therein a pair of the operated side identification information, which identifies the operated side terminal, and a reception status for a remote control at the terminal. For example, an operated side terminal represented by management number N001 is in a status where a remote control may be accepted, while an operated side terminal represented by management number N003 is in a status where a remote control may not be accepted. The reception status information management unit 123 updates the reception status information stored in the storage unit upon receiving the reception status information from the reception unit 121.

The determination unit 124 makes a determination as to whether or not a remote control is permitted based on the remote control request inputted from the reception unit 121. To be more specific, after referring the access permission information stored in the access permission information management unit 122, an initial determination is made based on whether or not a pair of an operating side terminal and an operated side terminal included in the remote control request is included in the access permission information.

The determination unit 124 refers to the reception status information stored in the reception status information management unit in order to determine whether a reception status of the operated side terminal included in the remote control request is in an "operable" mode; that is to say, the determination unit 124 makes a secondary determination as to whether or not the operated side terminal currently accepts the remote control.

The determination unit 124 gives an instruction to the transmission unit 125 to transmit a control message when the operating side terminal, or the user, on the operating side, is registered in the access permission information as the terminal, or the user, having permission to remote control the operated side terminal, or the user, on the operated side, and when the operated side terminal is in the (operable) status of accepting a remote control. Note that the instruction to transmit the control message includes, for example, the information concerning the operated side terminal and the operating side terminal identified in the remote control request.

The transmission unit 125 generates, at a control message generation unit arranged therein, a control message upon receiving a control message transmission instruction from the determination unit 124. The control message generation unit generates the control message using, for example, an email address of the operated side terminal, which is designated by the control message transmission instruction, as a destination thereof. The transmission unit 125 transmits the generated control message. Here, the transmission unit 125 transmits the control message by using a conventional communication means such as an email and/or SMS.

Note that a reason to use the above mentioned communication means is that the operated side terminals, like mobile telephone terminals, are tools for communication in the first place. That is to say, it is possible to broadly separate frequently used functions and/or applications from infrequently used functions and/or applications in a highly functionalized mobile telephone having installed therein a various types of applications. However, due to the nature of a mobile telephone terminal as a communication tool, communication functions, such as telephone function, mail function, SMS function are expected to remain activated whether or not a server function is loaded thereon. With this point recognized, the control message is transmitted via electronic mail and/or SMS. Note, the transmission unit 125 assigns an identifier to the message so as to identify the email being sent is related to a remote control, and such that a control message related to a remote control is distinguishable from regular email and/or SMS.

Next, the operated side terminal 140 will be described. The operated side terminal 140 is provided with a reception status information transmission unit 141, a control message reception unit 142 and a service providing unit 143.

The reception status information transmission unit 141 transmits, to the relay server, the reception status information which identifies a current reception status of the terminal with respect to a remote control. The reception status information transmission unit 141 transmits the reception status information, which includes the information identifying the terminal and its current reception status.

The control message reception unit 142 receives the control message transmitted from the transmission unit 125 of the relay server. To be more specific, the control message reception unit 142 receives a message via a communication means such as an email, and makes a determination as to whether the message is the control message from the relay server or a regular message based on the identifier assigned to the email. The control message reception unit 142 handles all the messages received as conventional email and/or SMS, and sends them to corresponding applications except for control messages. On the other hand, when the received message is a control message, the message is sent to the service providing unit 143.

The service providing unit 143, upon receiving the control message from the control message reception unit 142, starts a process to provide the remote control service as requested, and provides the service.

As described above, in the remote control system according to the first exemplary embodiment of the present invention, the relay server, which relays a remote control, appropriately receives information identifying the reception status for the remote control at the operated side terminal, which receives the remote control, and manages the reception status information of the operated side terminal. Now, even when the operating side terminal transmits a remote control request, unless the operated side terminal, which receives the remote control request, is in a status to accept a remote control at the current point, the relay server does not permit the start of the remote control, thereby no control message is transmitted to the operated side terminal. Consequently, it becomes possible to prevent unnecessary operations where the operated side terminal has to receive frequent control messages related to remote controls from the operating side terminal even when the operated side terminal is not in the status to receive a remote control.

Note, while the description above discloses that the access permission information management unit 122 and the reception status information management unit 123 each include the storage unit, and that the access permission information and the reception status information each are stored separately, the present exemplary embodiment is not limited thereto. The exemplary embodiment may include a common storage unit which stores therein the access permission information and the reception status information. Further, the exemplary embodiment may include an external database DB for storing the access permission information and the reception status information. The exemplary embodiment may be further configured such that the access permission information management unit 122 and the reception status information management unit 123 access the DB upon receiving a request from the determination unit 124, and return with the necessary access permission information and the reception status information to the determination unit 124.

### (Exemplary embodiment 2)

Hereinafter, a remote control system according to a second exemplary embodiment of the present invention will be described in detail with reference to the drawings. Note that building blocks and functions described in the first exemplary embodiment may be partially omitted from the description herein.

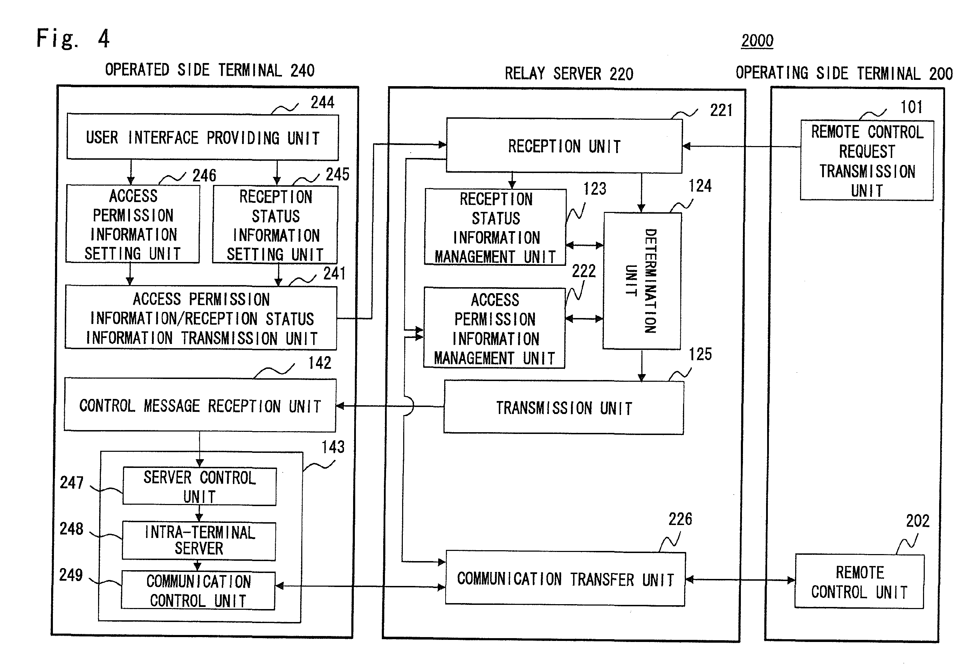

Fig. 4 is a block diagram illustrating a configuration of a remote control system 2000 according to the second exemplary embodiment of the present invention.

An operated side terminal 240 includes the control message reception unit 142, a service providing unit 143, an access permission information/reception status information transmission unit 241, a user interface providing unit 244, a reception status information setting unit 245, and an access permission information setting unit 246. Further, the service providing unit 143 includes a server control unit 247, an intra-terminal server 248, and a communication control unit 249.

The user interface providing unit 244 receives a user input via a touch panel and/or a numeric keypad, or the like, and displays an output to the user.

The reception status information setting unit 245 sets reception status information. To be more specific, based on an instruction from a user carried out via the user interface providing unit 244, the reception status information setting unit 245 sets a reception status of the operated side terminal 240 for a remote control operation, generates and outputs, to the access permission information/reception status information transmission unit 241, the reception status information. For example, in a case where the user wishes to execute a process requiring a high CPU utilization, such as watching a movie on the operated side terminal 240, the user is able to give, via the user interface providing unit 244, an instruction in advance to the reception status information setting unit 245 to set the reception status for a remote control as non-accepting in order to prevent disturbance during the movie viewing.

The access permission information setting unit 246 sets the access permission information. To be more specific, the access permission information setting unit 246 sets, based on an instruction inputted by a user via the user interface providing unit 244, a terminal and/or a user permitted to conduct a remote control with respect to the operated side terminal 240, and generates access permission information upon specifying the terminal and/or the user by a means such as an email address and/or a mobile telephone number. The access permission information setting unit 246 outputs the generated access permission information to the access permission information/reception status information transmission unit 241. The access permission information setting unit 246 also generates, based on an instruction from the user thereof, the access permission information when the access permission information related to the terminal and/or the user permitted to remote control the operated side terminal 240 are initially registered, and when cancellation or changes are made to the already permitted terminal and/or user.

The access permission information/reception status information transmission unit 241 transmits, to the relay server 120, the reception status information and the access permission information, respectively inputted from the reception status information setting unit 245 and the access permission information setting unit 246.

The control message reception unit 142 receives an email, or the like, extracts and outputs, to the server control unit 247, the control message transmitted from the transmission unit 125 of the relay server. In this description, it is to be noted that the received control message is a control message related to starting a remote control.

The server control unit 247 controls the status of the intra-terminal server in accordance with the content of the control message inputted from the control message reception unit 142. Since the inputted control message is the control message related to starting the remote control, the server control unit 247 executes a control such that the intra-terminal server 248 becomes activated.

The intra-terminal server 248 is a service providing means arranged to provide various types of services in accordance with the control from the server control unit 247, and operates the terminal functions upon receiving a request from the network.

The communication control unit 249 makes a connection with the relay server, and sends the communication from the relay server to the intra-terminal server 248. Further, the communication control unit 249 transmits data in accordance with the remote control request sent to the intra-terminal server 248.

Next, a relay server 220 will be described. A reception unit 221 receives a remote control request from an operating side terminal 200, and the reception status information and the access permission information from the operated side terminal 240, respectively. The received remote control request, the received reception status information, and the received access permission information are outputted, respectively, to the determination unit 124, the reception status information management unit 123, and an access permission information management unit 222.

The access permission information management unit 222 manages the access permission information. Upon being inputted with access permission information from the reception unit 221, the access permission information management unit 222 updates the access permission information, which is stored therein.

A communication transfer unit 226 receives and saves a connection from the communication control unit 249 of the operated side terminal 240, and transfers the saved connection when receiving a connection from a remote control unit 202 of an operating side terminal having access permission to the operated side terminal.

Note that the description of the functions of the reception status information management unit 123, the determination unit 124, and the transmission unit 125 is omitted as Fig. 1 illustrates the similar functions.

Next, the operating side terminal 200 will be described. The operating side terminal 200 includes the remote control request transmission unit 101 and the remote control unit 202. Note that the description of the functions of the remote control request transmission unit 101 is omitted as Fig. 1 illustrates the similar functions.

The remote control unit 202 makes a connection with the intra-terminal server 248 via the communication transfer unit 226 of the relay server 220, and controls the functions of the operated side terminal 240.

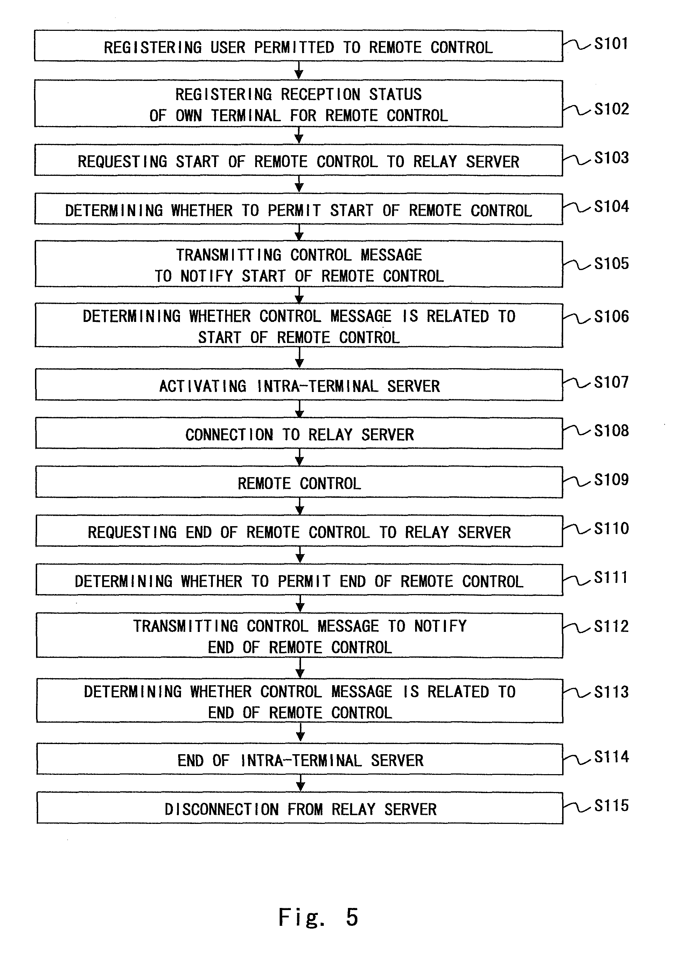

Next, an operation of the remote control system 2000 will be described. Fig. 5 is a flow chart illustrating a process flow of a remote control according to the remote control system 2000.

Firstly, the operated side terminal registers a terminal and/or a user permitted to remote control the operated side terminal as the access permission information at the relay server (Step S101). To be more specific, the operated side terminal transmits the operated side identification information of the operated side terminal and the operating side identification information of the permitted target to the relay server, which generates updates and registers the access permission information based on the information transmitted thereto.

Next, the operated side terminal registers, with the relay server as the reception status information, the reception status of its own terminal for a remote control (Step S102). The reception status information is appropriately updated in accordance with the status of the operated side terminal.

Next, the operating side terminal transmits a remote control start request so as to request a start of a remote control (Step S103). To be more specific, the remote control request transmission unit of the operating side terminal transmits, to the relay server, a message identifying the start of a remote control, the operating side identification information of the operating side terminal, and the operated side identification information of a desired target of the remote control.

The relay server receives the remote control request, and makes a determination as to whether or not to permit the requested remote control by referring to the access permission information and the reception status information (Step S104). To be more specific, the determination unit of the relay server makes a determination as to whether the remote control is permitted based on whether or not a pair of the operating side identification information and the operated side identification information included in the remote control request is stored in the access permission information. Further, the determination unit makes a determination as to whether the reception status of the operated side terminal specified in the operated side identification information included in the remote control request is identified as currently accepting the remote control in the reception status information.

In a case where it is determined, based on the above stated two determinations, that the remote control is permitted, the relay server transmits, to the operated side terminal, a control message notifying the start of the remote control to the operated side terminal (Step S105).

The operated side terminal receives a message, such as an email, and makes a determination as to whether or not the received message is a control message related to a remote control based on an identifier, which is attached to the message and identifies that the message is related to a remote control (Step S106).

The operated side terminal extracts the control message when it is determined at S106 that the message is a control message, and activates the intra-terminal server in accordance with the content of the control message (Step S107). Note that when it is determined that the received message is not a control message, the message is treated as a conventional email or an SMS and sent to a corresponding application, and the operated side terminal returns to a standby mode for messages.

Next, the communication control unit of the operated side terminal makes a connection with the relay server upon confirming that the intra-terminal server is activated (Step S108). The relay server receives the connection at the communication transfer unit thereof, verifies a connection source, and verifies, by referring to the access permission information management unit, whether the connection request, coming from an operated side terminal at the connection source, is from the operated side terminal, which is registered in the access permission information. In a case where the operated side terminal at the connection source is registered in the access permission information, the connection is maintained. On the other hand, in a case where the operated side terminal is not registered, the connection is rejected. Further, the remote control unit of the operating side terminal makes a connection to the relay server wherein the communication transfer unit receives the communication, verifies the connection source, and verifies, by referring to the access permission information management unit, whether the connection request, coming from an operating terminal at the connection source, is from the operating side terminal registered in the access permission information. In a case where the operating side terminal at the connection source is the operating side terminal registered in the access permission information, the connection request is transferred to the operated side terminal which makes up a pair with the operating side terminal in order to make a connection thereto. In a case where there is no registration, the connection is rejected.

Next, the operating side terminal uses the connection, transferred thereto via the relay server, to connect with the intra-terminal server of the operated side terminal, and remotely controls the functions of the operated side terminal (Step S109).

To end the remote control, the operating side terminal requests an end of the remote control to the relay server (Step S110). To be more specific, the remote control request transmission unit of the operating side terminal transmits, to the relay server, a remote control request including a message identifying the end of the remote control, the operating side identification information thereof, and the operated side identification information of the desired target to end the remote control.

Next, the relay server receives the remote control request, and makes a determination as to whether or not to permit the end of the remote control by referring to the access permission information (Step S111). To be more specific, the determination unit of the relay server makes a determination as to whether the request is permitted based on whether or not the pair of the operating side identification information and the operated side identification information included in the remote control request is stored in the access permission information.

In a case where it is determined, based on the above stated determination, that the end of the remote control is permitted, the relay server transmits to the operated side terminal a control message notifying the end of the remote control (Step S112).

The operated side terminal receives a message, such as an email, and makes a determination as to whether or not the received message is a control message related to the remote control based on the identifier, which is attached to the message and identifies that the message is related to a remote control (Step S1113).

In a case where it is determined at S 113 that the received message is the control message, the operated side terminal abstracts the control message and ends the remote control at the intra-terminal server in accordance with the content of the control message (Step S114).

Next, after confirming the end of the remote control at the intra-terminal server, the communication control unit disconnects the connection with the relay server (Step S115). Upon the disconnection from the communication control unit, the communication transfer unit disconnects the connection with the remote control unit.

As stated above, in the remote control system according to the second exemplary embodiment of the present invention, a user of the operated side terminal is operable to set up a reception status for a remote control via the user interface unit. Further, since the intra-terminal server is activated in accordance with the control message, it becomes possible to provide a variety of services such as sharing graphics files, or the like.

### (Exemplary embodiment 3)

Hereinafter, a remote control system according to a third exemplary embodiment of the present invention will be described in detail with reference to the drawings. Note that building blocks and functions described in the first and/or the second exemplary embodiment may be partially omitted form the description herein.

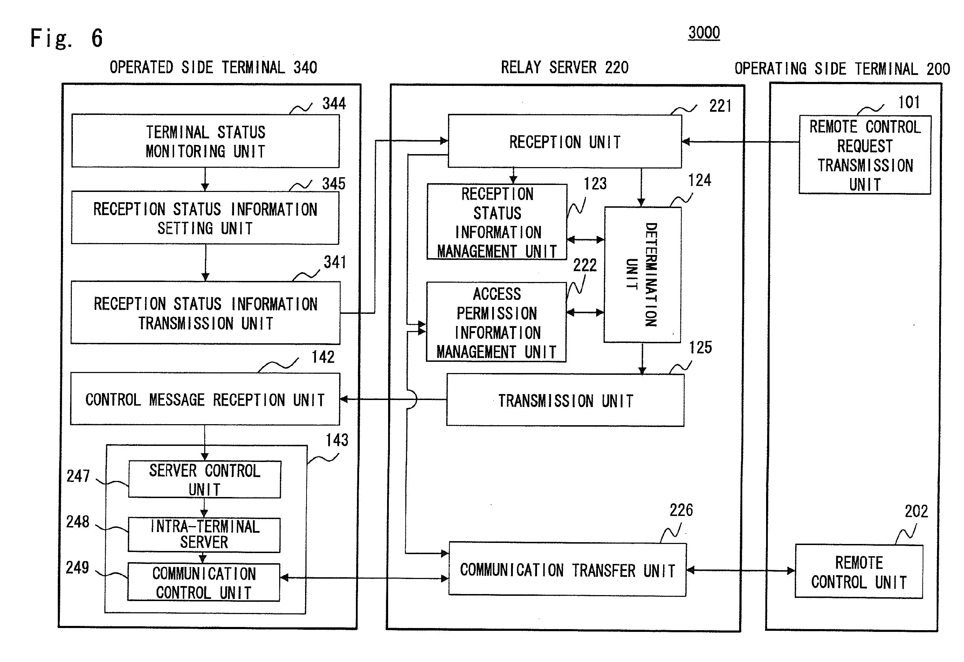

Fig. 6 is a block diagram illustrating a configuration of a remote control system 3000 according to the third exemplary embodiment of the present invention. Since the relay server 220 and the operating side terminal 200 have the same configurations as those in the second exemplary embodiment, the descriptions thereof are omitted herein.

An operated side terminal 340 further includes a terminal status monitoring unit 344.

The terminal status monitoring unit 344 monitors a status of the operated side terminal 340. To be more specific, the terminal status monitoring unit 344 monitors predetermined items to be monitored such as a remaining battery life and/or a CPU load. Here, the terminal status monitoring unit 344 notifies a reception status information setting unit 345 when the remaining battery life is below a predetermined reference value and/or the CPU load is above a predetermined reference value.

The reception status information setting unit 345 sets a reception status for the terminal with respect to a remote control upon receiving a notice from the terminal status monitoring unit 344, and generates corresponding reception status information. The reception status information setting unit 345 outputs the generated reception status information to a reception status information transmission unit 341.

The reception status information transmission unit 341 transmits the reception status information inputted from the reception status information setting unit 345 to the relay server 220.

According to the configuration described above, the terminal status monitoring unit contained in the operated side terminal monitors the status of the terminal, and makes a determination as to whether the terminal is in a status where a remote control is accepted from outside. In a case where the terminal is in a poor status to receive the remote control, the reception status information, which identifies that the remote control is not being accepted, is transmitted to and registered with the relay server. Consequently, since the control message related to the remote control is not transmitted from the relay server to the operated side terminal, it becomes possible to prevent unnecessary operations from being generated at the operated side terminal.

Note, while the description above discloses that the terminal status monitoring unit 344 monitors the remaining battery life and/or the CPU load, the exemplary embodiment is not limited thereto. For example, the reception status for a remote control of a terminal may be set up based on whether the terminal is being used for a call and/or a remote control from another terminal.

Further, when the battery is charged and/or the CPU load is reduced such that the predetermined reference value is cleared, the reception status information setting unit is notified to that effect by the terminal status monitoring unit 344, and the reception status information identifying that the reception status information setting unit 345 is operable to receive a remote control may be generated.

### (Exemplary embodiment 4)

Hereinafter, a remote control system according to a fourth exemplary embodiment of the present invention will be described in detail with reference to the drawings. Note that building blocks and functions described in the first exemplary embodiment through third exemplary embodiment may be partially omitted herein.

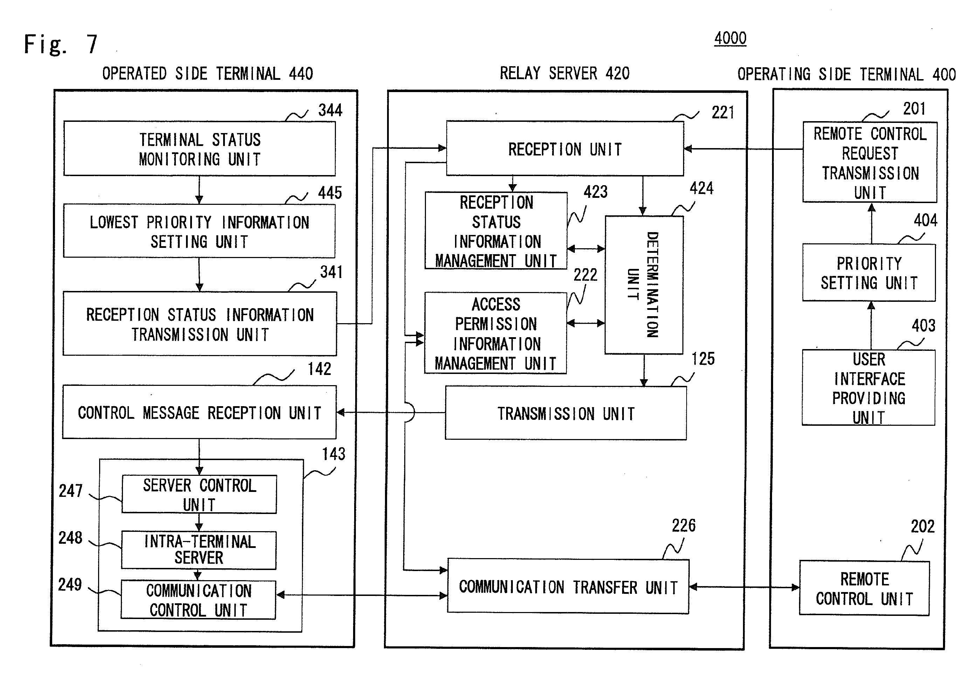

Fig. 7 is a block diagram illustrating a configuration of a remote control system 4000 according to the fourth exemplary embodiment of the present invention.

The operated side terminal 440 further includes a lowest priority information setting unit 445.

The lowest priority information setting unit 445 sets a lowest priority based on the status of the terminal which is notified by the terminal status monitoring unit 334 and/or an instruction from a user via a user interface unit, which is not depicted in the drawings. Here, the lowest priority is a value, identifying the lowest priority necessary to allow the terminal to be controlled remotely, in an 8 grades scale of 0 to 7, for example.

Based on the notification from the terminal status monitoring unit 344, the lowest priority information setting unit 445 sets the lowest priority high when the remaining battery life is becoming small and/or the CPU load is heavy, and sets up the lowest priority low when a charging cable is connected to the terminal and/or the display is set as non-display, for example.

The lowest priority information setting unit 445 generates the reception status information by utilizing the lowest priority set in a manner described above as the reception status for a remote control of the terminal. That is, the reception status information includes the information identifying the terminal and the lowest priority information. Thus, the reception status information is generated as the lowest priority is automatically determined at the lowest priority information setting unit 445 in accordance with the status of the terminal which is monitored by the terminal status monitoring unit 344.

The reception status information transmission unit 341 transmits, to the relay server, the reception status information which includes the lowest priority generated by the lowest priority information setting unit 445.

Next, an operating side terminal 400 will be described. The operating side terminal 400 further includes a user interface providing unit 403 and a priority setting unit 404.

The user interface providing unit 403 receives an input from the user via a touch panel and/or a number key pad, or the like, and displays an output to the user.

The priority setting unit 404 sets a priority with respect to a remote control based on an instruction from the user inputted via the user interface providing unit 403. The priority identifies the importance of each remote control where the greater the numerical value thereof is the more highly prioritized the control is.

Here, the priority is described in the 8 grades scale of 0 to 7 in the same manner as the lowest priority set for the operated side terminal. Note that, a numerical range of values set for the lowest priority information setting unit 445 may be the same or different as a numerical range of values set for the priority setting unit 404. In a case where an upper limit value, which can be set by the priority setting unit, is greater than an upper limit value, which can be set by the lowest priority setting unit, the remote control from the operating side terminal may be enforced regardless of the setting by the user on the operated side terminal. On the contrary, in a case where an upper limit value, which can be set by the priority setting unit, is smaller than an upper limit value, which can be set by the lowest priority setting unit, the remote control from the operating side terminal may be completely rejected when the user on the operated side terminal specifies a large value.

The priority setting unit 404 generates a remote control request which includes the set priority. That is, the priority setting unit 404 generates a remote control request which includes a message identifying to start a remote control, operating side identification information of a terminal, operated side identification information of a target of the remote control, and the set priority information.

The remote control request transmission unit 201 transmits, to the relay server, the remote control request which includes the priority information generated at the priority setting unit 404.

Next, a relay server 420 will be described. Note that the description on the block other than a reception status information management unit 423 and a determination unit 424 will be omitted herein.

The reception status information management unit 423 inputs the reception status information received at the reception unit 221, and manages the lowest priority for each operated side terminal.

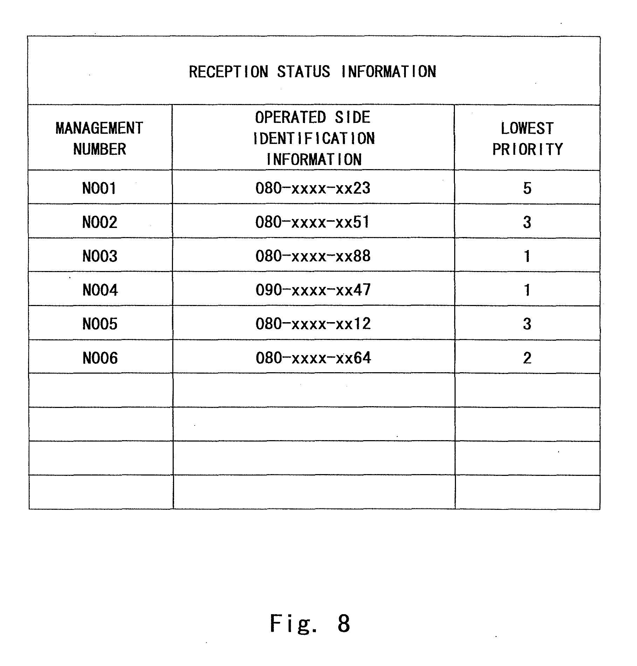

Fig. 8 is an example of the reception status information stored in the reception status information management unit 423. As illustrated in Fig. 8, the operated side identification information specifying an operated side terminal and the lowest priority of the operated side terminal, which make up a pair, are stored as the reception status information.

The determination unit 424 refers to the reception status information stored in the reception status information management unit 423, and makes a determination as to whether or not the priority, which is included in the remote control request received at the reception unit 221, exceeds the lowest priority of the operated side terminal which is specified in the remote control request.

In a case where the priority included in the remote control request exceeds the lowest priority, the determination unit 424 makes a determination that the remote control may be accepted. On the other hand, in a case where the priority included in the remote control request is below the lowest priority, the determination 424 makes a determination that it is impossible for the operated side terminal to accept the remote control.

As described above, in the remote control system according to the present exemplary embodiment, the remote control system of the exemplary embodiment is configured such that the priority of a remote control is transmitted from the operating side terminal, and, only when the priority exceeds the priority set in advance by the operated side terminal, a remote control message is transmitted to the operated side terminal. Accordingly, in a case where it is preferable to avoid a remote control for reasons such as low remaining battery life, and/or an operated side terminal user being engaged in an emergency operation, any remote control request having a lower priority transmitted thereto will be rejected by the relay server by setting a high lowest priority, which may also be automatically set by a terminal monitoring means. Consequently, since unnecessary messages will not be delivered to the operated side terminal, it becomes possible to prevent the unwanted increase of message identification processes at the operated side terminal.

Thus, according to the present remote control system, since a determination on whether or not a remote control is permitted is made at the relay server based on priority, wherein a control message not satisfying the priority conditions is not transmitted to the operated side terminal, it becomes possible to reduce processes required at the operated side terminal in a flexible manner thereby reducing energy consumption.

### (Exemplary embodiment 5)

Hereinafter, a remote control system according to a fifth exemplary embodiment of the present invention will be described in detail with reference to the drawings. Note that building blocks and functions described in the first exemplary embodiment through fourth exemplary embodiment may be partially omitted from the description herein.

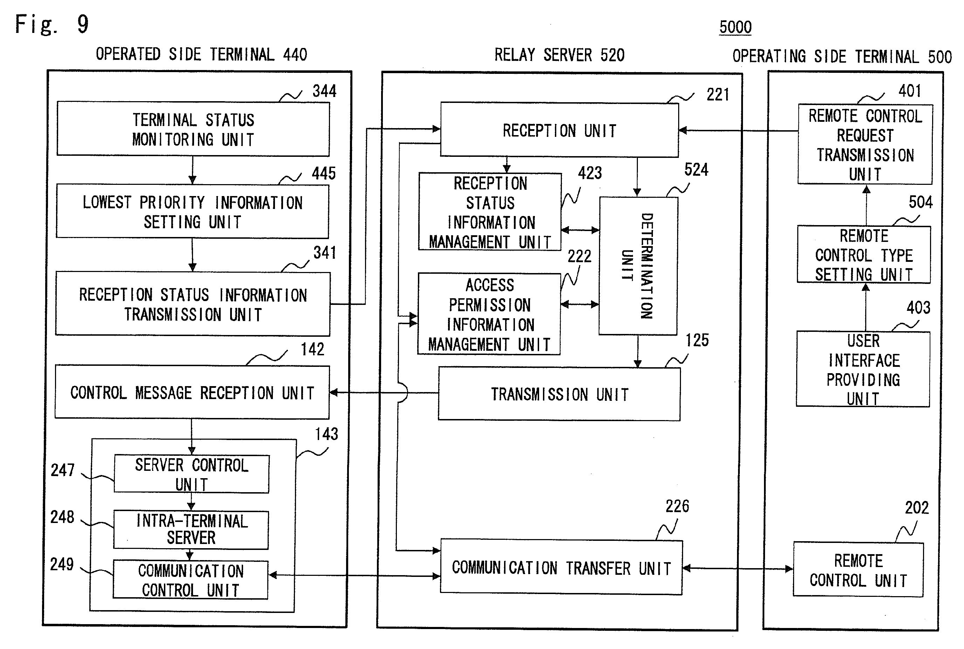

Fig. 9 is a block diagram illustrating a configuration of a remote control system 5000 according to the fifth exemplary embodiment of the present invention.

The operating side terminal 500 further includes a remote control type setting unit 504.

The remote control type setting unit 504 sets a type for a remote control, which is about to be executed, based on an instruction carried out by a user via the user interface providing unit 403. Here, the types for remote controls include, for example, activation or termination of the intra-terminal server, changing settings for a terminal, or transmission of various types of data such as position information and/or graphic files.

The user of the operating side terminal 500 selects, via the user interface providing unit 403, a remote control the user wishes to execute. The remote control type setting unit 504 generates a remote control request which includes the selected content of the remote control. That is, the remote control type setting unit 504 generates a remote control request which includes the information identifying the type of remote control in addition to the operating side identification information of the operating side terminal and the operated side identification information of a desired target of the remote control. The remote control request transmission unit 401 transmits the remote control request to the relay server 520.

A determination unit 524 of the relay server 520 makes a determination as to whether or not the type of remote control requested in the remote control request is permittable by referring to the reception status information stored in the reception status information management unit 423.

To be more specific, since each type of remote control is assigned with a priority respectively, the determination unit 124 makes a determination as to whether the priority, which is assigned to the type of remote control requested in the remote control request, exceeds the lowest priority identified in the reception status information.

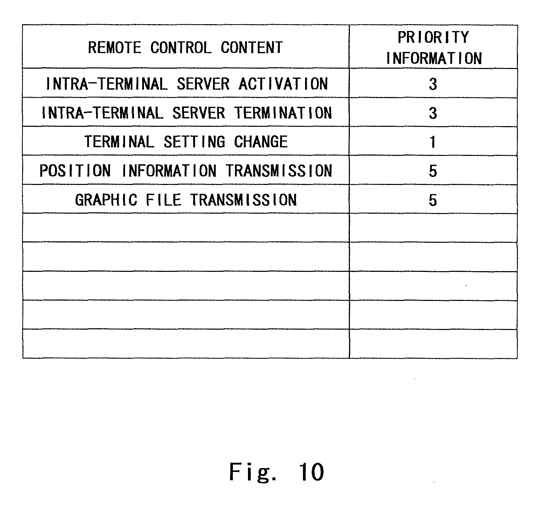

Fig. 10 illustrates the priorities assigned to contents of remote control respectively. For example, since a setting change for a terminal, such as help desk duties which require remotely controlling machinery to provide support thereto, and/or collectively managing terminals used by employees within a business enterprise, is generally high in the priority, a high priority is assigned thereto. On the other hand, a remote control related to a transmission of a graphic file is low in the priority, and thus, assigned with a low priority.

The determination unit 524 specifies a priority which corresponds to a type of a remote control requested in a remote control request received at the reception unit 221, specifies the lowest priority by referring to the reception status information stored in the reception status information management unit 423, and makes a comparison between the priority and the lowest priority. As a result of the comparison, in a case where the priority, which corresponds to the type of the remote control, exceeds the lowest priority, a determination is made to permit the remote control.

As described above, since the relay server 520 is operable to be set such that a priority is used, in a flexible manner, to determine whether or not to permit a remote control in accordance with the content of the remote control requested, the load imposed on the operated side terminal may be reduced while achieving a flexible remote control system.

As described in each exemplary embodiment above, according to the remote control system of the present invention, the load imposed on the operated side terminal is reduced while the user on the operating side terminal is allowed to execute a remote control at an arbitrary timing.

It is to be noted that the present invention is not limited to the exemplary embodiments above, and may be appropriately modified without departing from the gist of the present invention. For example, the determination unit at the relay server is an information process unit of a CPU, or the like, and the determination process carried out by the determination unit may be realized by executing a program. Further, the operated side terminal may be configured such that the functions provided by each unit at the operated side terminal are realized by executing a predetermined program by the information process unit such as a CPU, or the like, included in the operated side terminal.

The program may be stored by using a various types of non-transitory computer readable medium, and supplied to computers. The non-transitory computer readable medium includes a various types of tangible storage medium. Examples of the non-transitory computer readable medium include a magnetic recording medium (such as a flexible disk, a magnetic tape, and a hard disk drive), a magneto-optic recording medium (such as a magneto-optic disk), a CD-ROM (Read Only Memory), a CD-R, and a CD-R/W, and a semiconductor memory (such as a mask ROM, a PROM (Programmable ROM), an EPROM (Erasable PROM), a flash ROM, and a RAM (Random Access Memory)). Further, the program may be supplied to computers by using various types of transitory computer readable media. Examples of the transitory computer readable media include an electrical signal, an optical signal, and an electromagnetic wave. The transitory computer readable media may be used to supply programs to computer through a wire communication path such as an electrical wire and an optical fiber, or wireless communication path.

While the foregoing description of the present invention makes reference to the exemplary embodiments above, it is to be noted that the present invention is not limited to these exemplary embodiments. The configurations or the details of the present invention may be modified by those skilled in the art without departing from the scope of the invention.

This application claims priority based on Japanese Patent Application 2011-106898, filed on May 12, 2011, which application is incorporated herein in its entirety by disclosure.

Further, the present invention may take the following embodiments.
(1) A remote control system comprising a first mobile communication terminal device arranged to carry out a remote control as an operating side terminal, a second communication terminal device arranged to receive the remote control as an operated side terminal, and a relay server arranged to relay the remote control, wherein, the first mobile communication terminal includes a remote control request transmission means arranged to transmit a remote control request, the second mobile communication terminal device includes a reception status information transmission means arranged to transmit reception status information identifying a reception status remote control, a control message reception means arranged to receive a control message related to remote control, and a service providing unit arranged to provide a service based on the received control message, and the relay server includes a reception means arranged to receive the remote control request and the reception status information, an access permission information management means arranged to manage access permission information identifying a correspondence between the operating side terminal permitted to remote control or a user operating the operating side terminal and the operated side terminal or a user operating the operated side terminal, a reception status information management means arranged to manage the received reception status information, a determination means arranged to determine, based on the access permission information and the reception status information, whether to permit the remote control requested in the remote control request, and a control message transmission means arranged to transmit the control message related to the remote control when the remote control is permitted by the determination unit.
(2) A mobile communication terminal device comprising a reception status information transmission means arranged to transmit reception status information identifying a reception status for remote control, a control message reception means arranged to receive a control message related to remote control, and a service providing means arranged to provide a service based on the received control message.
(3) The mobile communication terminal device according to (2) further comprising a monitoring means arranged to monitor a status of the device, wherein the reception status information transmission means transmits the reception status information based on a result of monitoring by the monitoring means.
(4) The mobile communication terminal device according to (3) wherein the monitoring means monitors a remaining battery life or a CPU load, and the reception status information transmission means transmits the reception status information identifying the device is in a status to reject remote control when the remaining battery life monitored by the monitoring means is below a predetermined value, or when the CPU load monitored by the monitoring means is above a predetermined value.
(5) The mobile communication terminal device according to one of (2) to (4), wherein the reception status information transmission means transmits a lowest priority for a remote control accepted by the terminal as the reception status information identifying a reception status for a remote control.
(6) The mobile communication terminal device according to one of (2) to (5), wherein the service providing means includes a server means, a control means arranged to control the server means based on the control message, and a data transmission means arranged to transmit data in response to a remote control requested to the server means.
(7) A relay device comprising a reception means arranged to receive a remote control request requesting to start a remote control and reception status information identifying a reception status for the remote control, an access permission information management means arranged to manage access permission information identifying a correspondence between the operating side terminal permitted to remote control or a user operating the operating side terminal and the operated side terminal or a user operating the operated side terminal, a reception status information management means arranged to manage the received reception status information, a determination means arranged to determine, based on the access permission information and the reception status information, whether to permit the remote control requested in the remote control request, and a control message transmission means arranged to transmit the control message related to the remote control when the remote control is permitted by the determination unit.
(8) The relay device according to (7) wherein the remote control request includes priority information related to a priority of the remote control, the reception status information includes lowest priority information identifying a lowest priority of an acceptable remote control, the determination means makes a determination to permit the remote control requested in the received remote control request when a priority identified in the priority information included in the received remote control request exceeds the lowest priority identified in the lowest priority information included in the reception status information.
(9) The relay device according to (7) wherein the remote control request includes information related to a type of the remote control, the reception status information includes lowest priority information identifying a lowest priority of an acceptable remote control, the determination means makes a determination to permit the remote control requested in the received remote control request when a priority ascribed to a type of remote control requested in the remote control request exceeds the lowest priority identified in the lowest priority information.
(10) A relay method comprising steps of receiving reception status information identifying a reception status for a remote control at an operated side terminal from the operated side terminal receiving the remote control, receiving the remote control request from an operating side terminal executing the remote control, determining whether to permit the remote control requested in the remote control request based on access permission information identifying a correspondence between the operating side terminal or a user operating the operating side terminal and the operated side terminal or a user operating the operated side terminal, determining whether the operated side terminal accepts the remote control requested in the remote control request based on the received reception status information, and transmitting a control message related to the remote control to the operated side terminal when it is determined that the remote control is permitted and it is determined that the operated side terminal accepts the request.
(11) A determination program arranged to have an information processing device execute a process of determining whether to permit the remote control requested in the remote control request based on access permission information identifying a correspondence between the operating side terminal or a user operating the operating side terminal and the operated side terminal or a user operating the operated side terminal, and determining whether the operated side terminal accepts the remote control requested in the remote control request based on the received reception status information.

### Reference Signs List

- 100: OPERATING SIDE TERMINAL
- 101: REMOTE CONTROL REQUEST TRANSMISSION UNIT
- 120: RELAY SERVER
- 121: RECEPTION UNIT
- 122: ACCESS PERMISSION INFORMATION MANAGEMENT UNIT
- 123: RECEPTION STATUS INFORMATION MANAGEMENT UNIT
- 124: DETERMINATION UNIT
- 125: TRANSMISSION UNIT
- 140: OPERATED-SIDE TERMINAL
- 141: RECEPTION STATUS INFORMATION TRANSMISSION UNIT
- 142: CONTROL MESSAGE RECEPTION UNIT
- 143: SERVICE PROVIDING UNIT
- 200: OPERATING SIDE TERMINAL
- 201: REMOTE CONTROL REQUEST TRANSMISSION UNIT
- 202: REMOTE CONTROL UNIT
- 220: RELAY SERVER
- 221: RECEPTION UNIT
- 222: ACCESS PERMISSION INFORMATION MANAGEMENT UNIT
- 226: COMMUNICATION TRANSFER UNIT
- 240: OPERATED-SIDE TERMINAL
- 241: ACCESS PERMISSION INFORMATION/RECEPTION STATUS INFORMATION TRANSMISSION UNIT
- 244: USER INTERFACE PROVIDING UNIT
- 245: RECEPTION STATUS INFORMATION SETTING UNIT
- 246: ACCESS PERMISSION INFORMATION SETTING UNIT
- 247: SERVER CONTROL UNIT
- 248: INTRA-TERMINAL SERVER
- 249: COMMUNICATION CONTROL UNIT
- 340: OPERATED-SIDE TERMINAL
- 341: RECEPTION STATUS INFORMATION TRANSMISSION UNIT
- 344: TERMINAL STATUS MONITORING UNIT
- 345: RECEPTION STATUS INFORMATION SETTING UNIT
- 400: OPERATING SIDE TERMINAL
- 401: REMOTE CONTROL REQUEST TRANSMISSION UNIT
- 403: USER INTERFACE PROVIDING UNIT
- 404: PRIORITY SETTING UNIT
- 420: RELAY SERVER
- 423: RECEPTION STATUS INFORMATION MANAGEMENT UNIT
- 424: DETERMINATION UNIT
- 440: OPERATED-SIDE TERMINAL
- 445: LOWEST PRIORITY INFORMATION SETTING UNIT
- 445: LOWEST PRIORITY SETTING UNIT
- 500: OPERATING SIDE TERMINAL
- 504: REMOTE CONTROL TYPE SETTING UNIT
- 520: RELAY SERVER
- 524: DETERMINATION UNIT

## Claims

1. A remote control system comprising:
a first mobile communication terminal device arranged to carry out a remote control as an operating side terminal;
a second communication terminal device arranged to receive the remote control as an operated side terminal; and
a relay server arranged to relay the remote control, wherein
the first mobile communication terminal device includes a remote control request transmission means for transmitting a remote control request,
the second mobile communication terminal device includes a reception status information transmission means for transmitting reception status information identifying a reception status for the remote control,
a control message reception means for receiving a control message related to the remote control, and
a service providing means for providing a service based on the received control message, and
the relay server includes a reception means for receiving the remote control request and the reception status information,
an access permission information management means for managing access permission information identifying a correspondence between the operating side terminal, and an operating side user, permitted to remote control and the operated side terminal, and an operated side user,
a reception status information management means for managing the received reception status information,
a determination means for determining, based on the access permission information and the reception status information, whether to permit the remote control requested in the remote control request, and
a control message transmission means for transmitting, when the determination means determines the remote control is permitted, a control message related to the remote control.

2. A mobile communication terminal device comprising:
a reception status information transmission means for transmitting reception status information identifying a reception status for a remote control;
a control message reception means for receiving a control message related to the remote control; and
a service providing means for providing a service based on the received control message.

3. The mobile communication terminal device according to Claim 2 further comprising a monitoring means for monitoring a status of the device, wherein
the reception status information transmission means transmits the reception status information based on a result of monitoring by the monitoring means.

4. The mobile communication terminal device according to Claim 3, wherein
the monitoring means monitors a remaining battery life or a CPU load of the terminal, and
the reception status information transmission means transmits the reception status information identifying the device is in a status to refuse any remote control when the remaining battery life, monitored by the monitoring means, is below a predetermined value, or when the CPU load, monitored by the monitoring means, is above a predetermined value.

5. The mobile communication terminal device according to any one of Claim 2 to Claim 4, wherein
the reception status information transmission means transmits a lowest priority for a remote control accepted by the terminal as the reception status information identifying a reception status for a remote control.

6. The mobile communication terminal device according to any one of Claim 2 to Claim 5, wherein
the service providing means includes a server means,
a control means for controlling the server means based on the control message, and
a data transmission means for transmitting data in response to the remote control requested with respect to the server means.

7. A relay device comprising:
a reception means for receiving a remote control request requesting to start a remote control and reception status information identifying a reception status for the remote control;
an access permission information management means for managing access permission information identifying a correspondence between an operating side terminal, and an operating side user, permitted to remote control and an operated side terminal, and an operated side user;
a reception status information management means for managing the received reception status information;
a determination means for determining, based on the access permission information and the reception status information, whether to permit the remote control requested in the remote control request; and
a control message transmission means for transmitting, when the determination means determines the control message is permitted, a control message related to the remote control.

8. The relay device according to Claim 7, wherein
the remote control request includes priority information related to a priority of the remote control,
the reception status information includes lowest priority information identifying a lowest priority of an acceptable remote control, and
the determination means makes a determination to permit the remote control requested in the received remote control request when a priority, identified in the priority information included in the received remote control request, exceeds the lowest priority identified in the lowest priority information included in the reception status information.

9. The relay device according to Claim 7, wherein
the remote control request includes information related to a type of the remote control requested,
the reception status information includes lowest priority information identifying a lowest priority of an acceptable remote control, and
the determination means makes a determination to permit the type of the remote control requested in the received remote control request when a priority, ascribed to a type of a remote control requested in the remote control request exceeds the lowest priority identified in the lowest priority information.

10. A relay method comprising steps of:
receiving reception status information identifying a reception status for a remote control at an operated side terminal from the operated side terminal receiving the remote control;
receiving a remote control request from an operating side terminal executing the remote control;
determining whether the remote control requested in the remote control request is permitted based on access permission information identifying a correspondence between the operating side terminal, and an operating side user, permitted to remote control and the operated side terminal, and an operated side user;
determining whether the operated side terminal accepts the remote control requested in the remote control request based on the received reception status information; and
transmitting a control message related to the remote control to the operated side terminal when step 1 determines the remote control is permitted and step 2 determines the operated side terminal accepts the request.
